# EUROPÄISCHE PATENTANMELDUNG

(11) **EP 3 418 473 A1**
(43) Veröffentlichungstag der Anmeldung: **26.12.2018**
(21) Anmeldenummer: 18166304.8
(22) Anmeldetag: 09.04.2018
(51) Int. Cl.: E04G 17/14, E04G 25/04, F16B 1/00, F16B 7/22, E04G 25/00

(54) **MECHANISCHE KUPPLUNGSEINRICHTUNG**

(30) Priorität: 21.06.2017 CH 8102017
(71) Anmelder: Sacac AG, 5600 Lenzburg (CH)
(72) Erfinder: Kottucz, Jan, 6370 Stans (CH); Unteregger, Lukas, 8037 Zürich (CH); Müller, Martin, 8824 Schönenberg (CH); Werner, Uwe, 8825 Hütten (CH); Kiser, Daniel, 6060 Ramersberg (CH); Evertz, Jörg, 8903 Birmensdorf (CH); Nietlispach, Miriam Anne, 5000 Aarau (CH); Zimmermann, Jan, 8047 Zürich (CH)
(74) Vertreter: Felber, Josef

(57) **Zusammenfassung**

Die mechanische Kupplungseinrichtung besteht aus einer an einem Bauelement (3) anbaubaren Aufnahmehülse (2) und einem zugehörigen Kupplungsstecker (1). Dieser ist dem oberen Ende einer Stütze verbindbar ist, zum Einrasten in der Aufnahmehülse (2), die im Bauelement (3) eingebaut ist. Die Aufnahmehülse (2) bildet an ihrer Mündung (5) einen nach innen auskragenden Rand (6). Der Kupplungsstecker (1) besteht mindestens zwei Teilen, nämlich einem am Kupplungsstecker (1) stationären Einsteckteil (7) und einem aussen an ihm anliegenden und zu ihm in Einsteckrichtung verschiebbaren Sicherungsbolzen (8). Die beiden Teile (7,8) weisen einen solchen Querschnitt auf, dass sie nicht gemeinsam in die Aufnahmehülse (2) einsteckbar ist, sondern der Sicherungsbolzen (8) schlägt zunächst am Randbereich der Aufnahmehülse (2) an. Erst wenn das Einsteckteil (7) an der Aufnahmehülse (2) einrastet, gibt es den Weg frei für den Sicherungsbolzen (8), der dann durch Federkraft in die Aufnahmehülse (2) schiesst, wonach eine in jeder Richtung wirksame Kupplung erstellt ist.

## Beschreibung

Diese Erfindung betrifft eine mechanische Kupplungseinrichtung, um eine Stütze, zum Beispiel in Form einer Stange, eines Träger, einer Strebe oder eines Profils an einem anderen Element mechanisch aus einer Distanz von mehreren Metern mechanisch auf Zug und Druck zu verbinden oder zusammenzukuppeln, und zwar so, dass diese Stütze um das Element, an welches sie gekuppelt wurde, in einem gewissen Bereich auf und ab verschwenkbar bleibt, um die Kupplungsachse drehbar ist und in jeder Richtung Kräfte aufnehmen kann.

Insbesondere in der Baubranche müssen oftmals vorgefertigte Bauelemente ausgerichtet und abgestützt werden. Oftmals sind diese Bauelemente von einer beträchtlichen Höhe, sodass ihr oberer Bereich nicht mehr ohne Weiteres erreichbar ist, um dort von Hand Manipulationen vorzunehmen. Und trotzdem soll gerade in einem hinreichend hohen Bereich eines solchen Elementes eine Abstütz-Strebe mit demselben verbunden werden, um es auszurichten und zum Beispiel exakt im Lot zu halten. Als Beispiel sei das Aufstellen von Kandelabern erwähnt. Bei solchen Kandelabern kann es sich etwa um solche für Strassenlampen handeln, oder um Leitungsmasten für Hochspannungsleitungen, um Windmasten für Windräder, um Sendemasten oder Masten für andere Zwecke. Es handelt sich dabei um armierte Betonelemente, die im Schleuderverfahren in einer hohlen Stahlform hergestellt werden und viele Meter lang sein können. Im Fall von Windmasten werden im Schleuderbeton-Verfahren hergestellte Masten gefertigt, die aus mehreren Elementen zu Windmasten von bis zu 45 Länge zusammengebaut werden. Mit solchen Kupplungseinrichtungen können aber auch Schalungselemente genau ins Lot gerichtet und in dieser Position abgestützt und gesichert werden. Als weitere abzustützende Elemente seien generell Hochbaustützen erwähnt, aber auch Stahlbetonstützen, das heisst Betonstützen mit einer inneren Armierung, oftmals im Schleuderbetonverfahren hergestellt, aber auch in Form von Vierkant-Stützen gegossen. Weiter können es Verbundstützen sein, nämlich Stahlrohre, die mit Beton verfüllt sind.

Soll nun beispielsweise ein solcher Mast gesetzt werden und in ein Fundament einbetoniert werden, um anschliessend nach Aushärtung des Fundamentes genau im Lot zu stehen, muss er für das Ausrichten und hernach während des Aushärtens des gefüllten Fundamentes sicher und zuverlässig im Lot gehalten werden. Hierzu werden schiefwinklig zu ihm in einer möglichst grossen Höhe Stützen angelegt. Diese Stützen sollten mit ihren oberen Enden einfach, ohne direkten händischen Zugang zu den Andockpunkten, an die Masten ankuppelbar sein. Um eine zugkraftschlüssige und druckkraftschlüssige Verbindung mit dem Mast zu erzeugen, wird eine mechanische Kupplungseinrichtung benötigt, die besonders einfach und sicher zu handhaben ist. Gleichzeitig soll diese mechanische Verbindung so ausgestaltet sein, dass die Stützen gegenüber dem Mast, an dem sie mechanisch angekuppelt wurden, in einem gewissen Schwenkbereich verschwenkbar bleiben, um dadurch eine Flexiblität für das Ausrichten des Mastens sicherzustellen. Das Gleiche gilt für das temporäre Abstützen von Schalungselementen oder Fertigwandteilen.

Die Aufgabe der vorliegenden Erfindung ist es deshalb, eine mechanische Kupplungseinrichtung zu schaffen, mittels derer eine Stütze oder Strebe an ein Bauelement ankuppelbar ist, wobei das Ankuppeln von Ferne bewerkstelligbar sein soll, das heisst ohne direkten händischen Zugriff am Ort der Kupplung, und die Kupplung soll eine zugkraftschlüssige und druckkraftschlüssige Verbindung bieten. Weiter soll die angekuppelte Stütze oder Strebe mit dem Bauelement einen mittleren Winkel von 45° einschliessen können, und von dieser Verlaufrichtung, ausgehend vom Kupplungspunkt, um wenigstens bis zu 20° auf und ab schwenkbar sein und um den Kupplungspunkt rotierbar sein.

Diese Aufgabe wird gelöst von einer mechanischen Kupplungseinrichtung, bestehend aus einer an einem Bauelement an- oder einbaubaren Öffnung, deren Rand eine hintergreifbare Wand bildet, und einem zugehörigen Kupplungsstecker, der mit dem Ende einer Stütze verbindbar ist, zum zug- und druckkraftschlüssigen Einkuppeln an dieser Öffnung, wobei der Kupplungsstecker mindestens ein Einsteckteil und mindestens einen dazu beweglichen Sicherungsbolzen einschliesst, und wobei aufgrund deren Geometrie zunächst nur das Einsteckteil und erst nach seitlichem Verschieben des Einsteckteils in der Öffnung hernach der Sicherungsbolzen in die Öffnung einschiebbar ist, wonach die Kupplung in jeder von ihr einnehmbaren Richtung zug- und druckkraftschlüssig erstellt ist.

Anhand der Figuren wird ein Ausführungsbeispiel dieser mechanischen Kupplungseinrichtung in mehreren Ansichten gezeigt und in der nachfolgenden Beschreibung wird ihr Aufbau und ihre Funktion erklärt.

Es zeigt:
- Figur 1 :: Ein Beispiel eines Bauelementes, welches mit einer am Boden verankerten Stütze in einem 45° Winkel abgestrebt ist, wobei das obere Ende der Stütze mit dem Bauelement mechanisch verbunden ist;
- Figur 2a) bis h):: Das Verbauen einer Stütze in fortfolgenden Momentaufnahmen schematisch dargestellt, bis hin zur Demontage;
- Figur 3 :: Den Kupplungsstecker der mechanischen Kupplungseinrichtung in einer perspektivischen Ansicht von schräg vorne gesehen;
- Figur 4 :: Den Kupplungsstecker der mechanischen Kupplungseinrichtung in einer perspektivischen Ansicht von schräg hinten gesehen;
- Figur 5 :: Die mechanische Kupplungseinrichtung von der Seite her gesehen in einem Längsschnitt dargestellt, beim initialen Einstecken des Kupplungssteckers in die in einem Bauelement einbetonierte Aufnahmehülse, im Moment nach dem Einrasten des stationären Einsteckteils am unteren Mündungsrand der Aufnahmehülse;
- Figur 6 :: Die mechanische Kupplungseinrichtung von der Seite her gesehen in einem Längsschnitt dargestellt, nach dem Einfahren und Einschnappen des verschiebbaren Sicherungsbolzens auf dem stationären Einsteckteil des Kupplungssteckers;
- Figur 7 :: Die mechanische Kupplungseinrichtung von der Seite her gesehen, vordem Einfahren und Einschnappen des Sicherungsbolzens;
- Figur 8 :: Die mechanische Kupplungseinrichtung von der Seite her gesehen, nach dem Einfahren und Einschnappen des Sicherungsbolzens und somit nach dem Erstellen der gesicherten mechanischen Kupplung;
- Figur 9 :: Die mechanische Kupplungseinrichtung in einem Längsschnitt dargestellt, von der Seite her gesehen, nach erstellter und gesicherter Kupplung, wenn der Kupplungsstecker maximal nach unten geschwenkt ist;
- Figur 10 :: Die mechanische Kupplungseinrichtung von der Seite her gesehen, nach erstellter und gesicherter Kupplung, wenn der Kupplungsstecker maximal nach unten geschwenkt ist;
- Figur 11 :: Die mechanische Kupplungseinrichtung in einem Längsschnitt dargestellt, von der Seite her gesehen nach erstellter und gesicherter Kupplung, wenn der Kupplungsstecker maximal nach oben geschwenkt ist;
- Figur 12 :: Die mechanische Kupplungseinrichtung von der Seite her gesehen, nach erstellter und gesicherter Kupplung, wenn diese maximal nach oben geschwenkt ist;
- Figur 13 :: Den Kupplungsstecker und das Bauelement nach dem Einstecken des Einsteckteils, und zeitlich vor dem Einfahren des Sicherungsbolzens, von oben gesehen;
- Figur 14 :: Den Kupplungsstecker und das Bauelement nach dem fertigen Erstellen der nun gesicherten Kupplung, mit eingefahrenem Sicherungsbolzen, von oben gesehen;
- Figur 15 :: Den Kupplungsstecker und das Bauelement nach dem fertigen Erstellen der gesicherten Kupplung, mit maximal nach unten geschwenktem Kupplungsstecker;
- Figur 16 :: Den Kupplungsstecker und das Bauelement nach dem fertigen Erstellen der gesicherten Kupplung, mit maximal nach oben geschwenktem Kupplungsstecker.

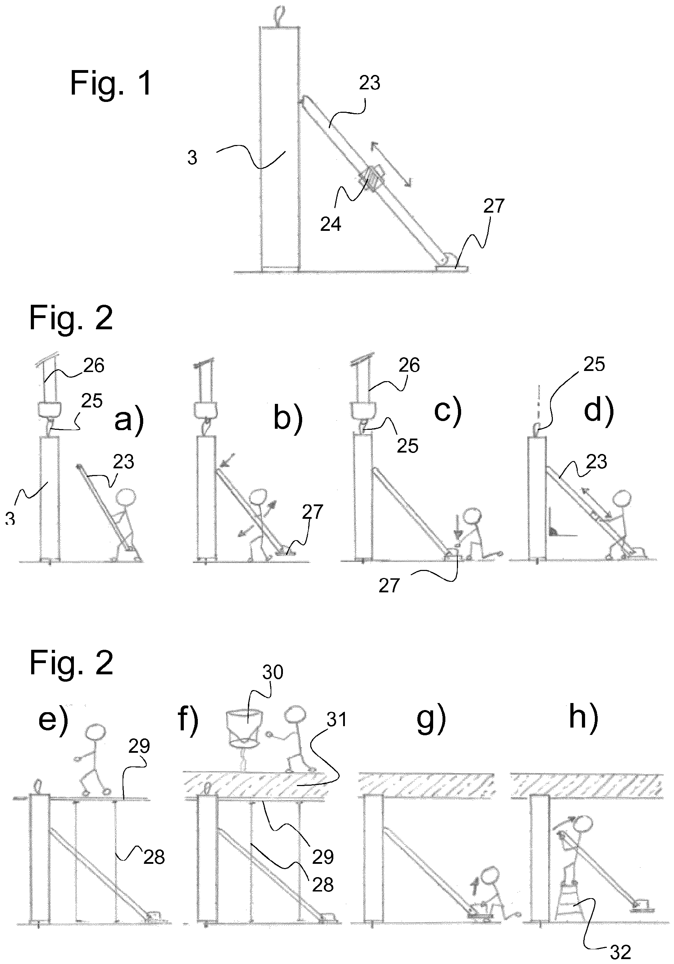

Zunächst zeigt die Figur 1 die grundsätzlich Problematik auf, wenn ein Bauelement 3 seitlich abgestrebt werden soll. Hierzu werden herkömmliche Stützen 23 eingesetzt, die mittels einer Gewindeverbindung 24 längenverstellbar sind. Am oberen Ende befindet sich ein gelenkig angebrachtes Verbindungselement, welches zum Beispiel mittels einer zugehörigen Schraube in eine in das Bauelement 3 einbetonierte Gewindehülse einschraubbar ist. Dann ist die Stütze 23 auf Zug und Druck am Bauelement 3 gesichert. Die Stütze 23 kann trotz dieser Verbindung gegenüber dem Bauelement 3 auf und ab geschwenkt und auch um die Verbindungsachse verdreht werden. Hier wurde sie in einem 45° Winkel zum Bauelement 3 am den Boden abgestellt. Am unteren Ende der Stütze 23 weist diese wie hier gezeigt eine gelenkig angebaute Abstützpratze 27 auf, die auf einem Betonboden oder auf einer Schalung mittels Schrauben temporär befestigbar ist.

Die Figur 2 zeigt in einer Sequenz in den Abbildungen a) bis h) das Abstreben eines Bauelements 3 mittels einer solchen Stütze 23, das heisst deren Installation und nach dem Betonieren wiederum deren Demontage. In Figur 2a) wird das Bauelement 3 von einem Kran am Kranhaken 25 und den Tragseilen 26 hängend in Stellung gebracht. Ein Arbeiter kommt mit der Stütze 23 und stellt sie in einem ca. 45° Winkel an das Bauelement 3. In Figur 2b) hat er die Stütze an ihrem oberen Ende bereits mit dem Bauelement 3 zug- und druckkraftschlüssig verbunden - in herkömmlicher Weise - zum Beispiel mit einer Schraubverbindung über ein gelenkig am Stützenende angebrachtes Verbindungselement und eine im Bauelement einbetonierte Schraubenhülse. Wie mit den beiden Pfeilen gezeigt ist die Stütze 23 in diesem Zustand noch um die Achse der Verbindung auf und ab schwenkbar. Am unteren Ende erkennt man die gelenkig angebaute Abstützpratze 27. In Figur 2c) sichert der Arbeiter diese Abstützpratze 27 auf der Unterlage, sei es auf einem Betonboden oder an einer Schalung. In Figur 2d) ist gezeigt, dass das Bauelement 3 noch genau ins Lot gerichtet wird, indem die Länge der Hochbaustütze verändert und justiert wird, bis das Bauelement 3 genau lotrecht auf dem Untergrund steht der Kranhaken 25 dann gelöst wird. Nach Erstellen der Schalung 29 auf ihren Stützen 28 wie in Figur 2e) gezeigt kann die nächste Boden-Deckenplatte 31 betoniert werden, wie in Figur 2f) gezeigt. Der Beton kann auf die Schalung gepumpt oder mit Krankübeln 30 herbeigeschafft werden. Nach dem Aushärten des Betons können die verbauten Stützen 23 entfernt werden. Zunächst wird die Sicherung am Boden gelöst, wie in Figur 2g) gezeigt, und schliesslich noch die Verbindung am oberen Ende wie in Figur 2h) gezeigt. Wie man sieht muss der Arbeiter hierzu auf eine Leiter 32 steigen, um die obere Verbindung zu lösen. Das Gleiche ist auch der Fall für die Erstellung dieser Verbindung, die in mehreren Metern Höhe liegen kann.

Es geht deshalb mit der vorliegenden Erfindung darum, eine verbesserte mechanische Kupplungseinrichtung zu schaffen, mittels derer eine solche Stütze 23 oder Strebe vom Boden aus händisch und ohne den Einsatz einer Leiter mit dem Bauelement 3 zug- und druckkraftschlüssig kuppelbar ist. Eine solche Kupplungseinrichtung wird in den folgenden Figuren dargestellt und anhand derselben beschrieben und ihre Funktion wird erklärt.

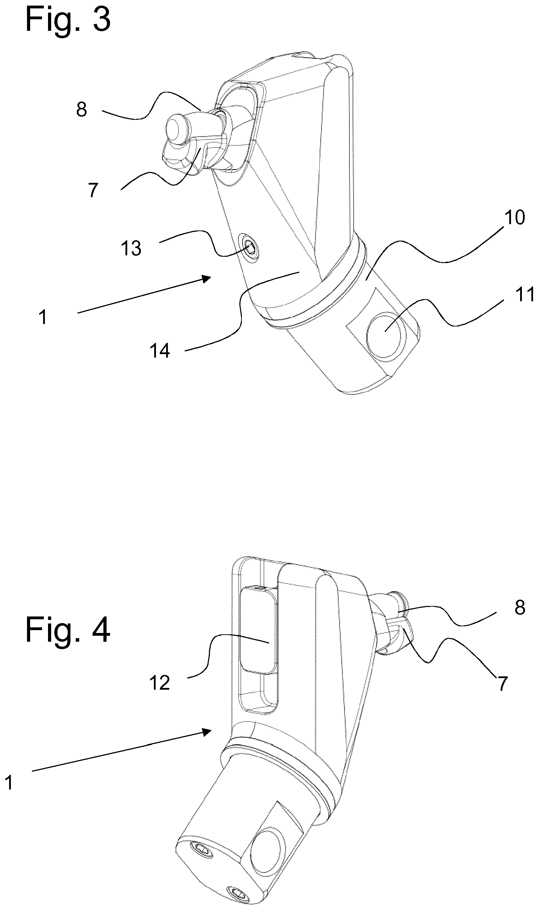

Zunächst ist in Figur 3 der Kupplungsstecker 1 als wesentliches Teil dieser mechanischen Kupplungseinrichtung in einer perspektivischen Ansicht von schräg vorne gesehen dargestellt. Es handelt sich beim Gehäuse zum Beispiel vorteilhaft um ein Druckgussteil aus einem oder mehreren Teilen, welches in einen Verbindungsbolzen 10 ausläuft, der in ein zugehöriges, nicht dargestelltes Stützrohr als Stütze 23 einsteckbar ist und in dieser eingesteckten Lage mit einem Querbolzen sicherbar ist. Der Querbolzen ist in die Querbohrung 11 an diesem Verbindungsbolzen 10 einsteckbar und wird hernach mit einem Splint gesichert. Bei der Stütze muss es sich allerdings nicht zwingend um ein Rohr handeln. Es kann auch eine Strebe oder eine Strebenkonstruktion sein, solange sie am oberen Ende eine Hülse für die Aufnahme dieses Verbindungsbolzens 10 aufweist, wobei die Hülse ebenfalls eine Querbohrung aufweist, damit der Sicherungsbolzen in die Querbohrung 11 am Verbindungsbolzen 10 einsteckbar ist und diese Steckverbindung mit einem Splint durch den Querbolzen sicherbar ist. Vorne am Kupplungsstecker 1 erkennt man ein nach vorne ragendes, zum Kupplungsstecker 1 gehörendes stationäres Einsteckteil 7. Oben auf diesem stationären Teil 7 lagert ein auf ihm verschiebbares Teil, nämlich ein Sicherungsbolzen 8. Diese beiden Teile, das stationäre Einsteckteil 7 und der darauf verschiebbare Sicherungsbolzen 8, sind wie man sieht ganz speziell geformt und gestaltet, damit sie ihre Funktion entfalten können, wie das im Weiteren noch erklärt wird. Es sind auch Ausführrungen realisierbar, die mehr als bloss ein einzelnes Einsteckteil 7 und einen einzelnen Sicherungsbolzen 8 aufweisen, indem diese Elemente zum Beispiel der Länge nach in mehrere Teile aufgeteilt sind. Die Imbusschraube 13 dient zum Befestigen der Deckplatte 14, die im Zug des Zusammenbaus des Kupplungssteckers 1 auf diesen aufgesetzt wird, nachdem die inneren Teile montiert sind.

In Figur 4 ist dieser Kupplungsstecker 1 der mechanischen Kupplungseinrichtung in einer perspektivischen Ansicht von schräg hinten gesehen dargestellt. Hier erkennt man einen Zugknopf 12. Zieht man an diesem, was gegen eine Federkraft erfolgt, so zieht man damit den verschiebbaren Sicherungsbolzen 8 im Formteil des Kupplungssteckers 1 zurück. Die spezielle Funktion dieser mechanischen Kupplungseinrichtung erschliesst sich aus den folgenden Figuren, in denen die Kupplungseinrichtung in verschiedenen Positionen im Zuge des Einkuppelns oder Auskuppelns sowie in verschiedenen Positionen nachdem Einkuppeln dargestellt ist.

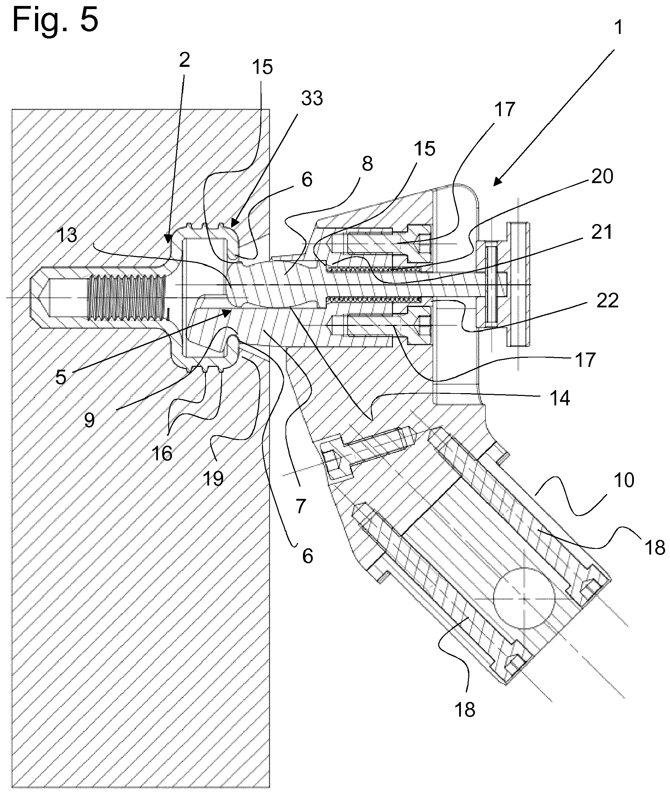

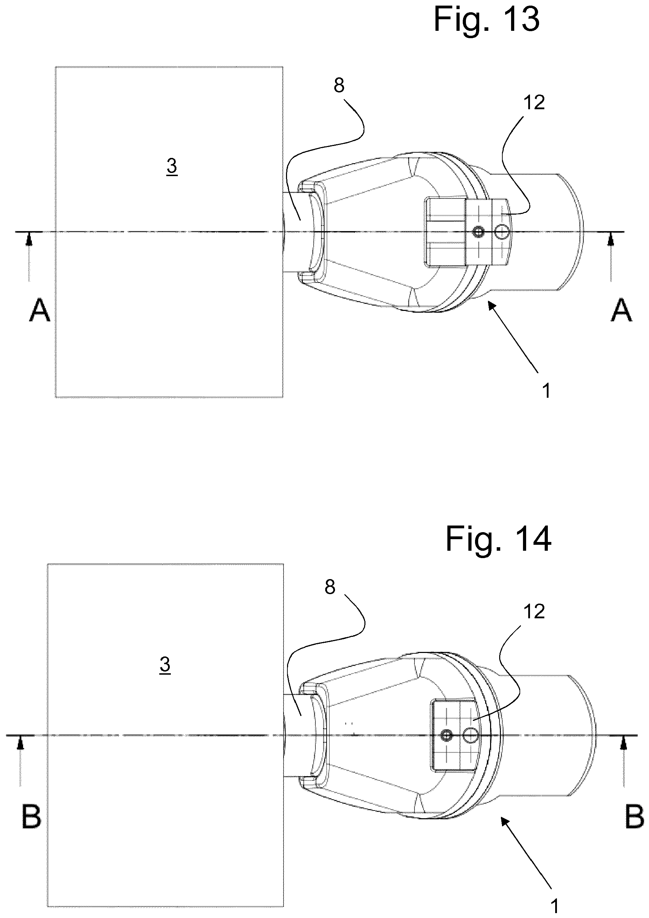

Die Figur 5 zeigt die mechanische Kupplungseinrichtung von der Seite her gesehen in einem Längsschnitt dargestellt. Der Schnitt erfolgte dabei längs der Linie A-A in Figur 13. Der Kupplungsstecker 1 soll in eine Aufnahmehülse 2 eingekuppelt werden, die in einem Bauelement 3 einbetoniert ist, um schliesslich eine auf Zug und Druck belastbare mechanische Kupplung zwischen dem Kupplungsstecker 1 und dem Bauteil 3 zu erzeugen. Die Aufnahmehülse 2 hat im hier gezeigten Längsschnitt die Form einer hohlen Schraube mit hohlem scheibenförmigem Schraubenkopf, welcher eine offene Mündung 5 bildet. Oben auf dem hohlen Schraubenkopf 33 ist ein nach innen auskragender Rand 6 gebildet, der also eine von aussen hintergreifbare Wand bildet. Aussen an ihrem Kopf 33 erkennt man Rippen 16, welche rund um den Kopf 33 verlaufen und im Beton nach dem Eingiessen der Aufnahmehülse 2 eine starke Verankerung bewirken, sodass die Aufnahmehülse 2 auf Zug belastbar ist. Ausserdem übersteht der gegossene Beton 17 die Stirnfläche des Kopfes 33 an ihrem äusseren Rand ein wenig, sodass hier eine weitere Rückhaltekraft generiert wird. Im dünneren Bereich der Aufnahmehülse 2 ist hier ein Innengewinde 16 in diesen Bereich hineingeschnitten. Damit kann die Aufnahmehülse 2 auch für konventionelle Kupplungen mittels einer dazu passenden Schraube verwendet werden. Für die Funktion der hier vorgestellten Kupplung ist allerdings einzig eine Öffnung mit nach innen auskragendem Rand nötig, bzw. eine hintergreifbare Wand. Eine solche hintergreifbare Wand kann indessen auch von einer Bohrung in einer Stahlplatte gebildet sein, wobei die Stahlplatte dann am oder im Bauelement 3 verankert wird. So kann etwa eine Bohrung in die Seitenwand eines Abschnittes eines Vierkantprofils eine solche Öffnung mit rundum hintergreifbarer Wand bilden, während das Vierkantprofil in das Bauelement eingegossen werden kann. Anstelle iener Bohrung kann auch ein nicht kreisrundes Fenster eine solche hintergreifbare Wand bilden. Ein solches Vierkantprofil kann dann die Funktion einer Aufnahmehülse übernehmen.

Der Kupplungsstecker 1 ist hier ein Druckgussteil, mit gespritzten oder nachträglich gebohrten Bohrungen für die Aufnahme eines Einsteckteils 7 und eines Sicherungsbolzens 8, die übereinander liegend angeordnet sind und mittels der Montageschrauben 17 im Innern des Kupplungssteckers 1 gehalten sind. Diese beiden Teile sind daher austauschbar, etwa bei Verschleiss oder zur Aufnahme geometrisch anders geformter Teile. Der Verbindungsbolzen 10 ist hier ebenfalls ein gesondertes Teil, welches auf den Kupplungsstecker 1 aufsetzbar und mit ihm mittels der Montageschrauben 18 verspannbar ist. In dieser Figur 5 ist der Kupplungsstecker 1 bereits mit seinem stationären Einsteckteil 7 in die Aufnahmehülse 2 eingesteckt worden. Das heisst, das Einsteckteil 7 wurde innerhalb des nach innen auskragenden Randes 6, der hier eine kreisförmige Öffnung gebildet ist, in die Aufnahmehülse 2 hineingeschoben. Das Einsteckteil 7 formt eine Verjüngung oder eine Einschnürung bzw. Vertiefung oder Nut 9, namentlich auf seiner unteren Seite, womit eine Stufe gebildet ist. Wie man hier erkennt, hat sich das Einsteckteil 7 mit seiner Vertiefung 9 über dem nach oben auskragenden Aussenrand 6 der Aufnahmehülse 2 abgesenkt und hängt somit mit der Stufe, welche diese Vertiefung 9 bildet, an der Hinterseite des Randes 6 ein und hintergreift diese vom Rand gebildete Wand. Das Einsteckteil 7 ist damit auf Zug in der Aufnahmehülse 2 gehalten. Gleichzeitig aber hat es sich im Innern der Aufnahmehülse 2 nach unten verschoben, also radial weg vom Zentrum der Aufnahmehülse 2. Damit wurde oberhalb der Einsteckteils 7 mehr Platz geschaffen. Zuvor, solange dieses Einsteckteil 7 sich noch nicht in dieser Art in der Aufnahmehülse 2 absenkte, stand der verschiebbare Sicherungsbolzen 8 mit seiner Stirnseite 13 am Kopf 33 der Aufnahmehülse 2 bzw. am nach innen auskragenden Rand 6 an und fand daran einen Anschlag. Der verschiebbare Sicherungsbolzen 8 konnte daher nicht in die Aufnahmehülse 2 eingeschoben werden. Vielmehr wurde er im Innern des Kupplungssteckers 1 gegen die Kraft einer im Innern des Kupplungssteckers 1 eingebauten Feder zurückgeschoben, als das untere, fest mit dem Kupplungsstecker 1 verbundene Einsteckteil 7 in das Innere der Aufnahmehülse 2 geschoben wurde. Die Feder wurde dabei gespannt. Man erkennt diese Feder 20 hinter dem Sicherungsbolzen 8. Es handelt sich hier um eine Druckfeder 20, die in axialer Richtung an einer vom hinteren Ende des eigentlichen Sicherungsbolzens 8 gebildeten Schulter 21 anliegt, und am anderen Ende an einer vom Formteil des Kupplungssteckers 1 gebildeten Schulter 22 anliegt. Anstelle einer Druckfeder könnten in anderen Ausführungen auf Tellerfedern oder gummielastische Elemente treten, oder zwei sich abstossende Permanentmagnete oder es könnte auch Zugfedern verbaut werden, die auf seitliche Schultern am Sicherungsbolzen wirken.

Der Sicherungsbolzen 8 musste, weil er zunächst an der Stirnseite der Aufnahmehülse 2 anschlägt, dieser Einsteckbewegung des Einsteckteils 7 zunächst ausweichen, nämlich durch Zurückverschieben auf der Oberseite des unteren Einsteckteils 7. Sobald aber das untere Einsteckteil 7 mit seiner Vertiefung 9 auf seiner Unterseite sich auf den Rand 6 absenkt und an ihm einhängt, wird oberhalb des Einsteckteils 7 mehr Platz geschaffen und augenblicklich schnellt das obere Teil, nämlich der auf dem unteren Einsteckteil 7 verschiebbare Sicherungsbolzen 8 kraft der gespannten der Druckfeder 20 im Innern des Kupplungssteckers 1 nach vorne und schiesst sozusagen mit einem deutlich vernehmbaren "Klack" ihn die Aufnahmehülse 2 hinein. Damit wird von der Kupplungseinrichtung auch ein verlässliches Bestätigungszeichen gegeben, dass die Kupplung erfolgreich erstellt wurde. Weiter kann eine Markierung an der Seite des Zug-Griffs am Sicherungsbolzen 8 angebracht sein, zum Beispiel eine photolumineszente Farbe bzw. Leuchtfarbe, die auch aus Distanz gut sichtbar ist. Wenn der Sicherungsbolzen 8 eingeschnappt ist und der Zugriff nach vorne in das Gehäuse des Kupplungssteckers eingeschoben ist, kann man diese Markierung nicht mehr erkennen und hat so auch eine optische Kontrolle über die zuverlässig erfolgte Kupplung. Dieses Einkuppeln gelingt mit diesem Kupplungsstecker 1, wenn er an das Ende einer Stütze 23 montiert ist, auf einer Höhe bis zu 4 m über dem Grund, indem eine Person einzig die Stütze 23 mit dem Kupplungsstecker an die Öffnung heranführt und dann das Einsteckteil 7 in die Öffnung bzw. Mündung der Aufnahmehülse 2 hineinschiebt. Es fällt mit seiner Nut über den Rand und der Sicherungsbolzen schnappt ein. Eine Leiter ist daher zum Einkuppeln nicht nötig.

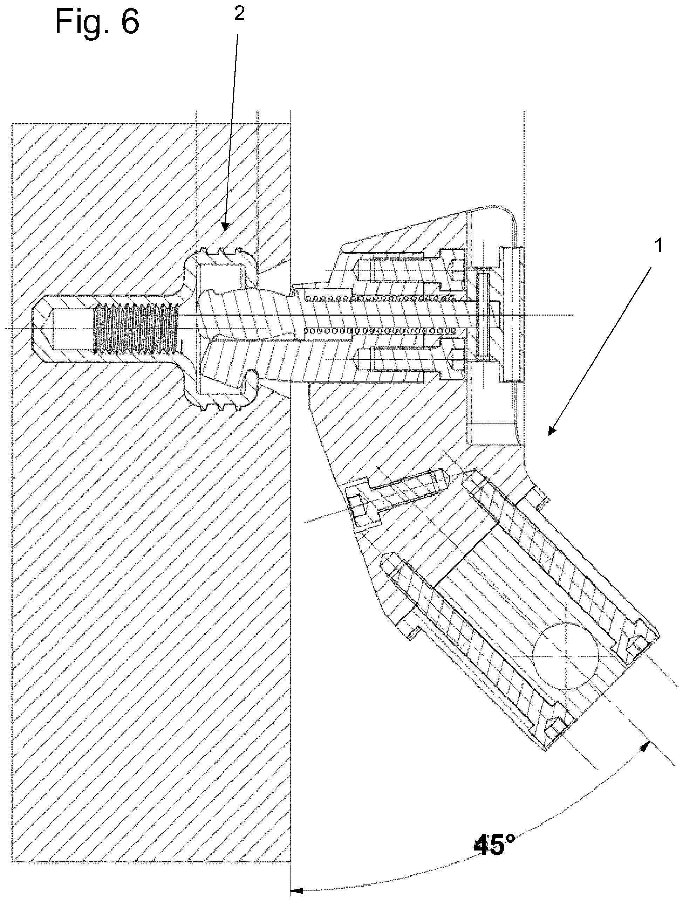

Die Situation, nachdem der Sicherungsbolzen 8 kraft der Druckfeder 20 nach vorne schnellte, ist in Figur 6 in einem Längsschnitt durch die Kupplungseinrichtung dargestellt. Der Schnitt erfolgte dabei längs der Linie B-B in Figur 14. Der Sicherungsbolzen 8 liegt dann auf dem hier unteren Einsteckteil 7 auf und die Mündung 5 der Aufnahmehülse ist von den beiden Teilen ausgefüllt. Der mit dem Sicherungsbolzen verbundene Zugknopf 12 ist nun auf der hinteren Seite des Kupplungssteckers eingefahren. Dieser bewegliche Sicherungsbolzen 8 weist eine ganz besondere Form auf, ähnlich eines bombierten Handgriffes 14 mit verdickten Endpartien 15. Die technische Funktion der Gestaltung sowohl des Einsteckteils 7 wie auch des Sicherungsbolzens 8 wird noch genauer erläutert. An dieser Stelle sei erwähnt, dass der Sicherungsbolzen 8 auch auf einer konvexen bogenförmig gestalteten Oberseite des Einsteckteils 7 verschiebbar sein könnte, indem er eine ebenfalls bogenförmige Unterseite aufwiese. Er würde dann in einer Schwenkbewegung längs dieses Bogens in die Aufnahmehülse einschnappen. In einer weiteren Ausführung könnte er auch leicht schiefwinklig zur Achse der Aufnahmehülse 2 in diese einschiebbar sein, indem die Oberseite des Einsteckteils 7 eine entsprechende, leicht schiefwinklig abfallende Rampe bildete, auf welcher der Sicherungsbolzen 8 verschiebbar wäre.

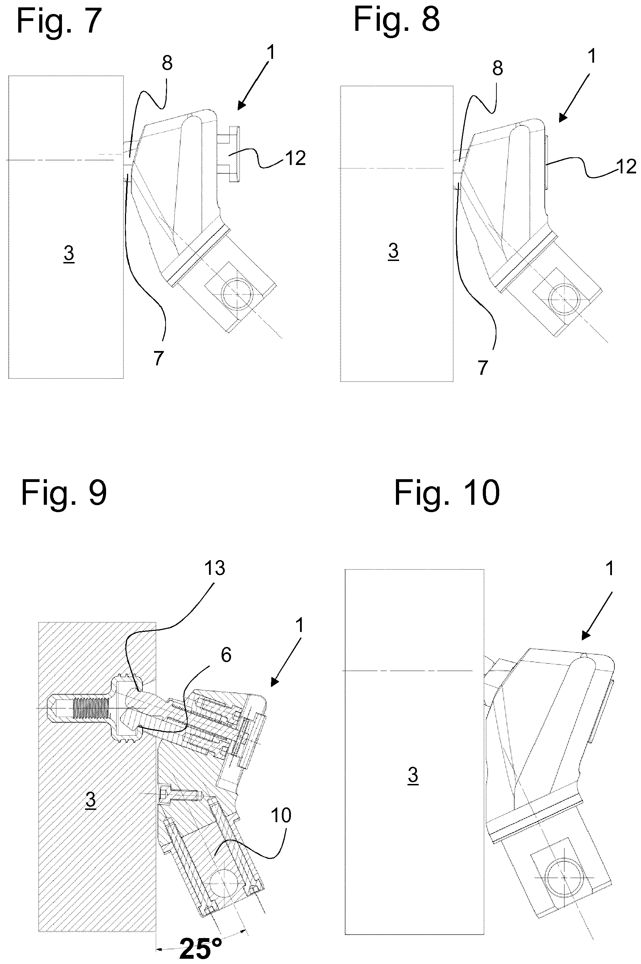

In Figur 7 ist die Kupplungseinrichtung nach dem Einstecken des Einsteckteils 7 in das Bauelement 3 bzw. in die in diesem Bauelement 3 eingegossene und hier nicht sichtbare Aufnahmehülse von der Seite her gesehen dargestellt. Hinten am Kupplungsstecker 1 erkennt man den Zugknopf 12, der vorne in den Sicherungsbolzen 8 ausläuft. Die Figur 8 daneben zeigt die Situation, wenn das stationäre Einsteckelement 7 auf den Rand der Aufnahmehülse abgesenkt wurde - hier nicht sichtbar - und an diesem Rand einhängte. Das schaffte Platz für das Einstecken des Sicherungsbolzens 8, der kraft der inliegenden Druckfeder 20 in die Aufnahmehülse schiesst. Entsprechend ist der Zugknopf 12 in den Kupplungsstecker 1 eingefahren und ragt nicht mehr hinten aus ihm hinaus.

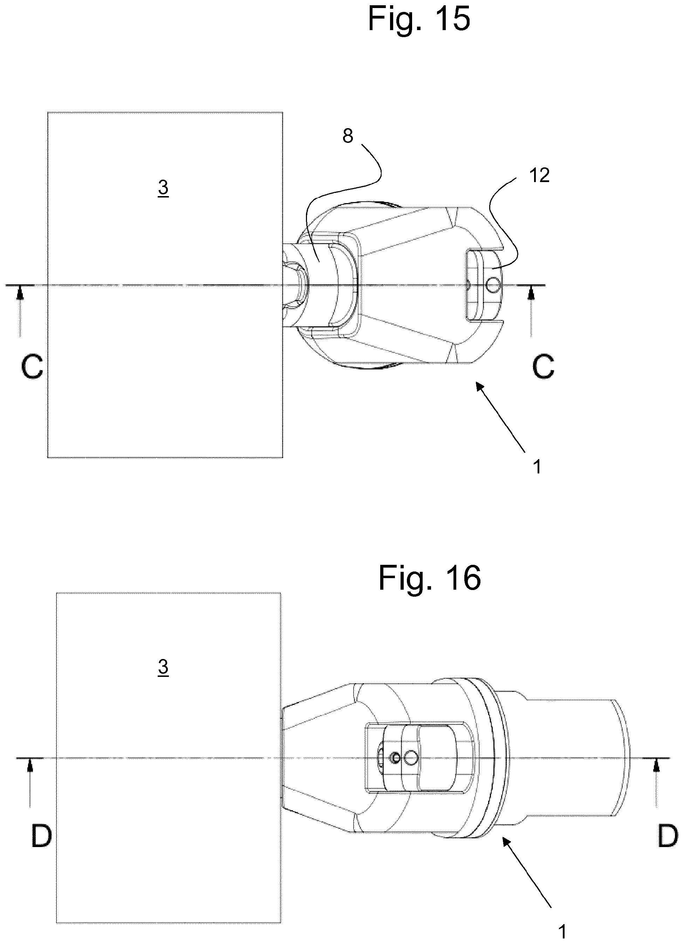

In Figur 9 ist in einer Schnittzeichnung dargestellt, wie weit diese mechanische Kupplungseinrichtung nach der Kupplung ein Abschwenken des Kupplungssteckers 1 erlaubt, nämlich bis der Kupplungsstecker 1 mit seiner Unterseite am Bauelement 3 anliegt. Im Schnitt längs der Linie C-C in Figur 15 gesehen würde man indessen erkennen, dass der Kupplungsstecker 1 wie in Figur 15 dargestellt noch nicht vollends abwärts geschwenkt am Bauelement 3 zum Anschlag gebracht ist. Von einem Winkel bei genau axialem Einschieben der Einsteckteils 7 und des Sicherungsbolzens 8 in die Aufnahmehülse 2 kann der Kupplungsstecker 1 um 20° nach unten geschwenkt werden. Damit schliesst der Steckbolzen 10 für das Stützrohr oder die Strebe mit dem Bauelement 3 einen Winkel von 25° ein. Insbesondere erkennt man anhand der Figur 9, welche Rolle die Geometrie des Einsteckteils 7 und des Sicherungsbolzens 9 spielt. Sie sorgen gemeinsam dafür, dass der Kupplungsstecker 1 in jeder Schwenklage sicher in der Aufnahmehülse 2 gehalten ist, indem in dem hier gezeigten Fall, bei nach unten geschwenktem Kupplungsstecker 1, die vordere Verdickung 13 am Sicherungsbolzen 8 auf der Innenseite des auskragenden Randes 6 der Aufnahmehülse 2 anschlägt. Der Einsteckbolzen 7 verhindert dabei ein Ausweichen, sodass also der Sicherungsbolzen 8 satt an diesen Rand 6 an der Hülse 2 gepresst wird. Die Figur 10 zeigt die mechanische Kupplungseinrichtung von der Seite her gesehen, nach erstellter und gesicherter Kupplung, wenn der Kupplungsstecker 1 am Bauteil 3 anschliessend maximal nach unten geschwenkt ist. Seine untere Seite findet in dieser Schwenklage am Bauwerk 3 einen Anschlag.

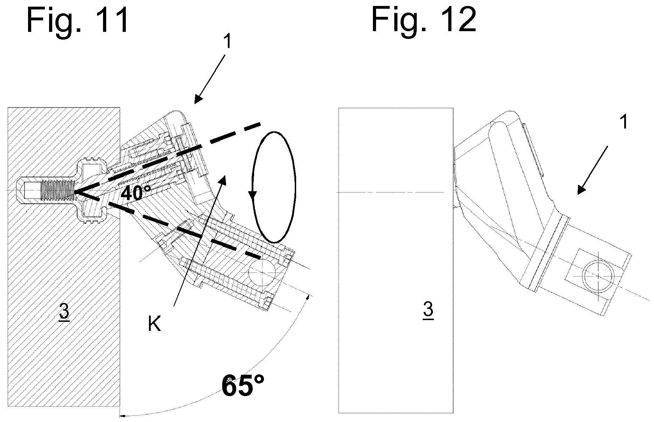

In Figur 11 ist in einer Schnittzeichnung gleichermassen dargestellt, wie weit diese mechanische Kupplungseinrichtung nach der Kupplung ein Aufschwenken des Kupplungssteckers 1 erlaubt, nämlich bis der Kupplungsstecker 1 mit seiner Oberseite am Bauelement 3 anliegt und dort einen Anschlag findet. Dieser Schnitt erfolgte hier längs der Linie D-D in Figur 16. Ausgehend von der Lage bei genau axialem Einschieben der Einsteckteils 7 und des Sicherungsbolzens 8 in die Aufnahmehülse 2 kann der Kupplungsstecker 1 um ebenfalls 20° nach oben geschwenkt werden. Damit schliesst der Steckbolzen 10 für das Stützrohr oder die Strebe mit dem Bauelement 3 unterhalb des Kupplungssteckers 1 einen Winkel von 65° ein, wie eingezeichnet. Insgesamt lässt sich der Kupplungsstecker 1 unter Beibehaltung der Zug- und Druckkraftaufnahme innerhalb eines Schwenkwinkels von hier 40° auf und ab verschwenken. Gleichzeitig sind die beiden eingesteckten Teile, das Einsteckteil 7 und der Sicherungsbolzen 8, in der Öffnung, in welcher sie gesichert stecken, rundum rotierbar, wie mit dem kreisförmigen Pfeil angedeutet. Die so angekuppelte Stütze kann daher seitlich geschwenkt werden und kann daher zum Bauelement asymmentrisch zum Boden hin verlaufen. Die Figur 12 zeigt den maximal nach oben geschwenkten Kupplungsstecker 1 in einer Ansicht von der Seite her gesehen. Auch hier erkennt man die Funktion der besonderen geometrischen Gestaltung von Einsteckteil 7 und Sicherungsbolzen 8. Der Sicherungsbolzen 8 liegt am inneren Rand 6 der Aufnahmehülse 2 an und das Einsteckteil 7 bleibt mit seiner Vertiefung bzw. der von ihr gebildeten Nut 9 am unteren Rand 6 der Aufnahmehülse 2 eingehängt und kann aus dieser Position nicht gegen das Zentrum der Hülse 2 hin ausweichen.

Die Figur 13 zeigt den Kupplungsstecker 1 und das Bauelement 3 von oben gesehen, nach dem Einstecken des Einsteckteils 7 und noch bevor der Sicherungsbolzen 8 in die Aufnahmehülse eingeschoben werden konnte. Entsprechend ragt hinten der Zugknopf 12 am Sicherungsbolzen 8 aus dem Kupplungsstecker 1 heraus. Von oben stellt sich die Ansicht gemäss Figur 14 dar, wenn dann der Sicherungsbolzen 8 nach vorne geschoben wurde und der Kupplungsstecker 1 sicher auf Zug- und Druckkraft in der Aufnahmehülse eingekuppelt ist. Der Zugknopf 12 ist hier in den Kupplungsstecker 1 eingefahren.

Die Figur 15 zeigt den Kupplungsstecker 1 und das Bauelement 3 nach dem fertigen Erstellen der gesicherten Kupplung, mit maximal nach unten geschwenktem Kupplungsstecker 1 in einer Ansicht von oben gesehen, und die Figur 16 zeigt ihn nach dem fertigen Erstellen der gesicherten Kupplung maximal nach oben geschwenkt.

Zum Lösen der Kupplung muss für einen Abbau der Zugknopf 12 in axialer Ausrichtung des Kupplungssteckers 1 zur Aufnahmehülse 2 aus dem Kupplungsstecker 1 herausgezogen werden. In dieser Lage kann der Sicherungsbolzen 8 mit einem Splint oder einer Schraube gesichert werden. Dann kann der Kupplungsstecker 1 innerhalb der Aufnahmehülse 2 leicht angehoben werden, womit das Einsteckteil 7 mit seiner Verjüngung 9 bzw. seiner Nut vom inneren Rand des nach innen auskragenden Randes 6 der Aufnahmehülse 2 weggehoben wird. Hernach kann der Kupplungsstecker 1 mitsamt seinem Einsteckteil 7 in axialer Richtung rückwärts aus der Aufnahmehülse 2 gezogen und andernorts wieder verwendet werden.

Zusammenfassend ist klar, dass diese grundsätzliche Lösung mit einem Einsteckteil 7 und einem Sicherungsbolzen 8 an jeder Öffnung oder Bohrung einsetzbar ist, deren Rand eine nach innen, das heisst gegen das Zentrum der Öffnung oder Bohrung auskragende, hintergreifbare Wand bildet. Jede entsprechend für das Einsteckteil 7 und seinen Sicherungsbolzen 8 dimensionierte Bohrung in einer Stahlplatte passender Stärke kann daher zur Aufnahme des Kupplungssteckers dienen. Die Stahlplatte kann auf vielerlei Weise mit einem Bauelement verbunden sein, zum Beispiel aufgeschweisst, verschraubt, einbetoniert oder anderswie befestigt.

### Ziffernverzeichnis

- 1: Einsteckteil
- 2: Aufnahmehülse
- 3: Bauelement
- 4: Stütze
- 5: Mündung der Aufnahmehülse
- 6: Nach innen auskragender Rand an Mündung
- 7: Stationäres Einsteckteil am Kupplungsstecker
- 8: Verschiebbarer Sicherungsbolzen
- 9: Vertiefung im stationären Einsteckteil 7
- 10: Verbindungsbolzen für Stützrohr
- 11: Bohrung für Querbolzen am Steckbolzen
- 12: Zugknopf hinten am Sicherungsbolzen 8
- 13: Stirnfläche des Sicherungsbolzens 8
- 14: Bombierter Teil des Sicherungsbolzens
- 15: Verdickte Endpartien des Sicherungsbolzens
- 16: Innengewinde in der Aufnahmehülse
- 17: Montageschrauben für Einsteckteil 7 und Sicherungsbolzen 8
- 18: Montageschrauben für Verbindungsbolzen 10
- 19: Beton
- 20: Druckfeder
- 21: Schulter hinten am Sicherungsbolzen 8
- 22: Stufe für die Druckfeder 20 an Kupplungsstecker 1
- 23: Stütze zum Verbinden mit dem Kupplungsstecker
- 24: Verstellgewinde an der Stütze
- 25: Kranhaken
- 26: Kran-Tragseile
- 27: Abstützpratze am unteren Ende der Stütze
- 28: Baustütze
- 29: Deckenschalung
- 30: Beton-Krankübel
- 31: Beton-Decke
- 32: Leiter
- 33: Kopf der Aufnahmehülse

## Patentansprüche

1. Mechanische Kupplungseinrichtung, bestehend aus einer an einem Bauelement (3) an- oder einbaubaren Öffnung, deren Rand eine hintergreifbare Wand bildet, und einem zugehörigen Kupplungsstecker (1), der mit dem Ende einer Stütze (23) verbindbar ist, zum zug- und druckkraftschlüssigen Einkuppeln an dieser Öffnung, wobei der Kupplungsstecker mindestens ein Einsteckteil (7) und mindestens einen dazu beweglichen Sicherungsbolzen (8) einschliesst, und wobei aufgrund deren Geometrie zunächst nur das Einsteckteil (7) und erst nach seitlichem Verschieben des Einsteckteils (7) in der Öffnung hernach der Sicherungsbolzen (8) in die Öffnung einschiebbar ist, wonach die Kupplung in jeder von ihr einnehmbaren Richtung zug- und druckkraftschlüssig erstellt ist.

2. Mechanische Kupplungseinrichtung nach Anspruch 1, ***dadurch gekennzeichnet,* dass** die an- oder einbaubare Öffnung aus einer am Bauelement (3) ein- oder anbaubaren Aufnahmehülse (2) besteht, die an ihrer Mündung (5) einen zum Mündungszentrum hin auskragenden Rand (6) bildet, und der zugehörige Kupplungsstecker (1) über seinen Querschnitt aus mindestens zwei Teilen besteht, nämlich aus einem am Kupplungsstecker (1) stationären Einsteckteil (7) und einem aussen an ihm anliegenden und zu ihm in Einsteckrichtung verschiebbaren Sicherungsbolzen (8), wobei das stationäre Einsteckteil (7) einen solchen Querschnitt aufweist, dass es nicht zusammen mit dem an ihm verschiebbaren Sicherungsbolzen (8) in die Aufnahmehülse (2) einsteckbar ist, sondern der letztere aussen am Randbereich der Aufnahmehülse (2) mit seiner Stirnfläche (13) anschlägt, und somit das stationäre Einsteckteil (7) zunächst nur allein in die Aufnahmehülse (2) einsteckbar ist, und wobei das stationäre Einsteckteil (7) an einer Stelle eine Verjüngung (9) aufweist, sodass eine Stufe gebildet ist, mit welcher es am nach innen auskragenden Rand (6) der Aufnahmehülse (2) einrastbar und einhängbar ist und in radialer Richtung in der Aufnahmehülse (2) ein stückweit ausweicht, wonach der verschiebbare Sicherungsbolzen (8) ebenfalls in die Aufnahmehülse (2) einschiebbar ist und hernach aufgrund der geschaffenen gemeinsamen Geometrie des ins Innere der Aufnahmehülse (2) ragenden Einsteckteils (7) und des daran anliegenden Sicherungsbolzens (8) diese beiden Teile in einer von der Einsteckrichtung abweichenden Richtung fest in der Aufnahmehülse (2) verankert sind und darin rotierbar und in einer Ebene schwenkbar sind.

3. Mechanische Kupplungseinrichtung nach Anspruch 1, **dadurch gekennzeichnet, dass** die an- oder einbaubare Öffnung durch ein am Bauelement (3) an- oder einbaubares Stahlteil mit Fenster oder Bohrung gebildet ist, wobei der Rand des Fensters oder der Bohrung eine hintergreifbare Wand bildet, und der zugehörige Kupplungsstecker (1) über seinen Querschnitt aus mindestens zwei Teilen besteht, nämlich aus einem am Kupplungsstecker (1) mit einem stationären Einsteckteil (7) und einem aussen an ihm anliegenden und zu ihm in Einsteckrichtung verschiebbaren Sicherungsbolzen (8), wobei das stationäre Einsteckteil (7) einen solchen Querschnitt aufweist, dass es nicht zusammen mit dem an ihm verschiebbaren Sicherungsbolzen (8) in das Fenster oder die Bohrung einsteckbar ist, sondern der letztere aussen am Randbereich des Fensters oder der Bohrung mit seiner Stirnfläche (13) anschlägt, und somit das stationäre Einsteckteil (7) zunächst nur allein in das Fenster oder die Bohrung einsteckbar ist, und wobei das stationäre Einsteckteil (7) an einer Stelle eine Verjüngung (9) aufweist, sodass eine Stufe gebildet ist, mit welcher es am nach innen auskragenden Rand (6) des Fensters oder der Bohrung einrastbar und einhängbar ist und in radialer Richtung im Fenster oder in der Bohrung ein stückweit ausweicht, wonach der verschiebbare Sicherungsbolzen (8) ebenfalls in das Fenster oder die Bohrung einschiebbar ist und hernach aufgrund der geschaffenen gemeinsamen Geometrie des ins Innere des Fensters oder der Bohrung ragenden Einsteckteils (7) und des daran anliegenden Sicherungsbolzens (8) diese beiden Teile in einer von der Einsteckrichtung abweichenden Richtung fest im Fenster oder der Bohrung verankert sind und darin rotierbar und in einer Ebene schwenkbar sind.

4. Mechanische Kupplungseinrichtung nach einem der Ansprüche 1 bis 2, ***dadurch gekennzeichnet,* dass** die Aufnahmehülse (2) aussen die Form einer hohlen Stahlschraube ohne Aussengewinde und mit rundem scheibenförmigen Kopf (33) aufweist, wobei durch eine zentrale Bohrung im scheibenförmigen Kopf (33) eine Öffnung mit rundum hintergreifbarer Wand gebildet ist, und wobei die Innenseite des sonst mit einem Aussengewinde versehenen Teils der Schraube mit einem Innengewinde ausgestattet ist, und die Aussenseite des scheibenförmigen Kopfes rundumlaufende Rippen (16) aufweist, die bei Einbetonierung der Aufnahmehülse (2) als Rückhaltemittel zu wirken bestimmt sind.

5. Mechanische Kupplung nach einem der vorangehenden Ansprüche, ***dadurch gekennzeichnet,* dass** der Kupplungsstecker (1) über seinen Querschnitt aus mindestens zwei Teilen besteht, nämlich einem stationären Einsteckteil (7) und einem aussen an ihm anliegenden und zu ihm in allgemeiner Einsteckrichtung linear oder längs eines Bogens verschiebbaren Sicherungsbolzens (8), welcher im Innern des Kupplungssteckers (1) durch eine Druckfeder (20) geführt ist, welche mit einem Ende an der hinteren Schulter (21) des Sicherungsbolzens (8) anliegt, und mit dem anderen Ende an einer Stufe (22), die innerhalb der Aufnahmebohrung im Kupplungsstecker (1) gebildet ist.

6. Mechanisches Kupplungselement nach einem der Ansprüche 1 bis 4, ***dadurch gekennzeichnet,* dass** der Kupplungsstecker (1) über seinen Querschnitt aus mindestens zwei Teilen besteht, nämlich einem stationären Einsteckteil (7) und einem aussen an ihm anliegenden und zu ihm in Einsteckrichtung verschiebbaren Sicherungsbolzen (8), welcher im Innern des Kupplungssteckers (1) durch ein gummielastisches Element geführt ist, welches mit einem Ende an der hinteren Schulter (21) des Sicherungsbolzens (8) anliegt, und mit dem anderen Ende an einer Stufe (22), die innerhalb der Aufnahmebohrung im Kupplungsstecker (1) gebildet ist.

7. Mechanisches Kupplungselement nach einem der Ansprüche 1 bis 4, ***dadurch gekennzeichnet,* dass** der Kupplungsstecker (1) über seinen Querschnitt aus mindestens zwei Teilen besteht, nämlich einem stationären Einsteckteil (7) und einem aussen an ihm anliegenden und zu ihm in Einsteckrichtung verschiebbaren Sicherungsbolzen (8), welcher im Innern des Kupplungssteckers (1) von einer Feder in Form einer Zugfeder, einer magnetisch wirkenden Zug- oder Druckfeder oder eines auf Zug und Druck gummielastischen Element so betätigbar ist, dass der Sicherungsbolzen (8) über das Einsteckteil (7) schiebbar ist.

8. Mechanisches Kupplungselement nach einem der vorangehenden Ansprüche, ***dadurch gekennzeichnet,* dass** der Kupplungsstecker (1) mit seinem Einsteckteil (7) und seinem Sicherungsbolzen (8) im Spritzgussverfahren hergestellte Druckgussteile aus Aluminium sind.

9. Mechanisches Kupplungselement nach einem der Ansprüche 1 bis 7, **dadurch gekennzeichnet, dass** der Kupplungsstecker (1) mit seinem Einsteckteil (7) und seinem Sicherungsbolzen (8) im Spritzgussverfahren hergestellte Verbundmaterialteile mit Glas- oder Kohlefaserverstärkung sind.

10. Mechanisches Kupplungselement nach einem der vorangehenden Ansprüche, ***dadurch gekennzeichnet,* dass** der Kupplungsstecker (1) zwei oder mehr Einsteckteile (7) und zwei oder mehr Sicherungsbolzen (8) aufweist.

11. Mechanisches Kupplungselement nach einem der vorangehenden Ansprüche, ***dadurch gekennzeichnet,* dass** mit dem Einschieben des Sicherungsbolzens (8) ein vernehmbares "Klack"-Geräusch erzeugbar ist, sodass die sichere Erstellung der Kupplung akustisch anzeigbar ist.

12. Mechanisches Kupplungselement nach einem der vorangehenden Ansprüche, ***dadurch gekennzeichnet,* dass** das erfolgreiche Einkuppeln des Kupplungssteckers (1) durch eine seitliche Farb-Markierung am Zugknopf optisch überprüfbar ist, indem diese Markierung bei eingekuppeltem Kupplungsstecker nicht mehr sichtbar ist.

13. Mechanisches Kupplungselement nach einem der vorangehenden Ansprüche, ***dadurch gekennzeichnet,* dass** das Einkuppeln des Kupplungssteckers (1) auf einer Stütze (23) auf einer Höhe bis zu 4m über dem Grund von einer Person durch einzig Führen der Stütze (23) bewerkstelligbar ist.
